# EUROPÄISCHE PATENTSCHRIFT

(11) **EP 2 278 424 B1**
(45) Veröffentlichungstag und Bekanntmachung des Hinweises auf die Patenterteilung: **28.09.2011**
(21) Anmeldenummer: 09009450.9
(22) Anmeldetag: 21.07.2009
(51) Int. Cl.: G05B 19/042

(54) **Verfahren zum Betrieb eines Diagnosesystems für ein Kraftfahrzeug und Diagnosesystem zur Ausführung des Verfahrens**
Method for operating a diagnosis system for a motor vehicle and diagnosis system for implementing the method
Procédé de fonctionnement d'un système de diagnostic pour un véhicule automobile et système de diagnostic pour l'exécution du procédé

(43) Veröffentlichungstag der Anmeldung: 26.01.2011
(73) Patentinhaber: SIEMENS AKTIENGESELLSCHAFT, 80333 München (DE)
(72) Erfinder: Köhler, Ralf, 67160 Wissembourg (FR)

(56) Entgegenhaltungen:
- WO-A-2004/104604
- WO-A-2005/091094
- WO-A-2006/071457
- CREMMEL A ET AL: "Proposal of an ODX data exchange system applied to automotive diagnosis" 21. September 2008 (2008-09-21), CYBERNETICS AND INTELLIGENT SYSTEMS, 2008 IEEE CONFERENCE ON, IEEE, PISCATAWAY, NJ, USA, PAGE(S) 1275 - 1280 , XP031441633 ISBN: 978-1-4244-1673-8 Introduction; Section II.A; page 1278,right column, first two paragraphs

## Beschreibung

Die Erfindung betrifft ein Verfahren zum Betrieb eines Diagnosesystems für ein Kraftfahrzeug gemäß dem Oberbegriff des Patentanspruchs 1, und ein Diagnosesystem für ein Kraftfahrzeug gemäß Patentanspruch 8.

Diagnosesysteme, auch Diagnosetester genannt, werden von KFZ-Werkstätten und KFZ-Herstellern für Wartungs- und Instandsetzungsarbeiten an Kraftfahrzeugen verwendet. Dabei wird das Diagnosesystem an ein Kraftfahrzeug angeschlossen, um aus einem fahrzeugseitigen Informationssystem, beispielsweise der Motorelektronik, oder aus sonstigen Komponenten des Kraftfahrzeuges Fehlerzustände, Messwerte und andere Daten auszulesen. Gebräuchliche Diagnosesysteme sind dabei regelmäßig als mobile Prüfgeräte ausgebildet und umfassen eine Recheneinheit (Computer oder computer-ähnliches Gerät), in der sämtliche Funktionen des Diagnosesystems in Form von SystemKomponenten ausgeführt sind. Dazu gehören neben einer Schnittstelle zum Kraftfahrzeug die sog. Geschäftslogik (auch Business-Logik oder Back-End genannt) und die Präsentationslogik (auch als Anzeigelogik oder Front-End bezeichnet), wobei diese Komponenten regelmäßig in einem einzigen Gerät integriert sind. Zur Präsentationslogik gehören neben einer - meist graphischen - Benutzeroberfläche auch Einrichtungen zur Protokollierung und Einrichtungen zum Datenaustausch mit einer - meist herstellerseitigen - Zentrale. Gebräuchliche Diagnosesysteme sind auch als entsprechend programmierte und mit einer entsprechenden Schnittstelle versehene Notebook-Computer ("Laptop") oder sogar als sog. "PDA" (PDA = Personal Digital Assistant) ausgeführt.

Gebräuchliche Diagnosesysteme verbinden sich beispielsweise mit der sog. "OBD"-Schnittstelle modernerer Kraftfahrzeuge (OBD = On board Diagnose); darüber hinaus sind oft auch proprietäre Schnittstellen im Einsatz.

Sowohl die Kraftfahrzeuge als solche als auch die Diagnosesysteme werden heutzutage oft nicht mehr jeweils spezifisch für einen bestimmten nationalen oder regionalen Markt hergestellt, sondern sollen möglichst in unveränderter Form weltweit vertrieben und genutzt werden können. Dabei besteht jedoch häufig das Problem, dass sich in den einzelnen Nationalstaaten bzw. "Märkten" nicht nur die verwendete Sprache unterscheiden kann, sondern auch die gebräuchlichen Einheiten. So ist beispielsweise das Service-Personal in vielen angelsächsischen Ländern gewohnt, mit nicht-SI-Einheiten wie Meilen, Zoll etc. zu arbeiten. Aus diesem Grund besteht bei gebräuchlichen Diagnosesystemen die Möglichkeit, das Gerät jeweils auf landsspezifische Einstellungen zu programmieren, so dass beispielsweise bei einem Diagnosesystem in den vereinigten Staaten von Amerika die Fahrzeuggeschwindigkeit in "miles per hour" statt in "km pro Stunde" angezeigt wird. Die entsprechenden Daten werden dazu nach dem Auslesen aus dem Kraftfahrzeug in die jeweils landesspezifisch benutzte Einheit umgerechnet ("konvertiert"). Dies führt jedoch oftmals zu dem Problem, dass der "unverfälschte" Ursprungswert eines Parameters nachträglich nicht mehr ermittelt werden kann und die Mehrfachnutzung eines Wertes in unterschiedlichen Einheiten und Anzeigeformaten nicht mehr möglich ist. Zwar kann ein einmal umgerechneter Wert durch eine weitere Umrechnung wieder in seinen Ursprungswert zurückübersetzt werden, aber neben dem dazu erforderlichen Aufwand können zwischenzeitliche Rundungen und andere Maßnahmen dazu führen, dass der ursprüngliche Wert nicht mehr vollständig (originalgetreu) wiederhergestellt wird. Ein weiteres Problem besteht darin, dass bei vielen Werten innerhalb der "Verarbeitungskette" ("Workflow") oft nicht mehr klar ist, von welchem Sensor oder von welcher Komponente dieser Wert eigentlich stammt. So kann beispielsweise die Geschwindigkeit eines Kraftfahrzeugs sowohl von einem Sensor im Getriebe als auch von einem Sensor des Antiblockiersystems gemessen worden sein.

In WO 2004/104604 ist ein Diagnosesystem beschrieben, das sich mittels einer funkbasierten Kommunikationsschnittstelle die Ergebnisse der On-Board-Systemdiagnose im Fahrzeug selbst herunterladen kann und auf einer Off-Board-Diagnoseplattform auswertet. Die On-Board-Diagnose sammelt hierbei Fahrzeugdaten, indem sie die Busse, an denen die Steuergeräte angeschlossen sind, nach Fehlern abhört. Diese Fehler werden aufbereitet und in einem Speicher mit relevanten Zustandsinformationen über die Steuergeräte abgelegt. Ein Diagnoserechner kann sich in festgelegten Zeitabständen diese Informationen abholen und sie in einem Ringpuffer ablegen. Nach Auslösung der Telediagnose werden die aussagekräftigsten Daten an die Diagnosezentrale im Customer Assistance Center geschickt.

Aus WO 2006/071457 ist eine Kommunikationsvorrichtung für einen tragbaren Computer bekannt, die Kommunikationsverbindungen zu einer Fahrzeugsteuerungseinheit ermöglicht. Mittels der Fahrzeugsteuerungseinheit wird zumindest eine Fahrzeugfunktion realisiert. Eine Anforderung einer Fahrzeugfunktion zur Abfrage einer Steuerungsinformation wird im XML-Format vom Computer an die Fahrzeugsteuerungseinheit übermittelt. Dabei wird die Anforderung in ein steuerungseinheitspezifisches Format umgewandelt. Wenn eine Antwort von der Fahrzeugsteuerungseinheit im steuerungseinheitspezifischen Format vorliegt, wird diese in das XML-Format umgewandelt. Die umgewandelte Antwort wird anschließend zum Computer gesendet.

WO 2005/091094 offenbart ein Verfahren zur Verarbeitung eines Signals einer industriellen Anlage, das eine physikalische Ausgangsgröße wiedergibt. Aus dem Signal wird ein Ausgangssignal ermittelt, das eine abgeleitete physikalische Zielgröße wiedergibt. Hierbei wird eine automatische Umrechnung der Einheit der Ausgangsgröße in eine Zieleinheit der Zielgröße vorgenommen.

Es ist daher eine Aufgabe der vorliegenden Erfindung, die Datenhaltung in der Verarbeitungskette eines Diagnosesystems zu verbessern und dabei insbesondere die beschriebenen Nachteile abzustellen.

Zur Lösung der vorstehenden Aufgabe ist es eine zentrale Idee der Erfindung, die Daten (einheitsrelevante Informationen), die aus einem Kraftfahrzeug ausgelesen werden, in einem sog. "Textcontainer" zu kapseln. Über diesen Textcontainer kann dann immer wieder auf den Ursprungswert zugegriffen werden, der dann jeweils bei Bedarf in eine neue Einheit oder in eine neue Darstellungsform umgesetzt werden kann.

Die Lösung der Aufgabe sieht insbesondere ein Verfahren zum Betrieb eines Diagnosesystems für ein Kraftfahrzeug vor, wobei diagnoserelevante Daten aus einem fahrzeugseitigen Informationssystem in das Diagnosesystem übertragen werden, und wobei das Diagnosesystem durch ein Autorensystem konfiguriert wird. Dabei wird ein Wert eines Parameters der diagnoserelevanten Daten des Kraftfahrzeugs nach der Übertragung in das Diagnosesystem zusammen mit einer zugehörigen Quelleinheit und einer den Parameter bezeichnenden Referenz in einem Textcontainer gespeichert, wobei dem Textcontainer mittels des Autorensystems eine definierte Zieleinheit zugefügt wird, und wobei der ursprüngliche Wert und die Quelleinheit stets im Textcontainer verbleiben. An einer oder an mehreren Verwendungsstellen des Parameters und damit des Wertes wird dann jeweils eine Umsetzung des Wertes von der Quelleinheit in die Zieleinheit vorgenommen. Durch dieses Verfahren kann immer wieder auf den ursprünglichen Wert (beispielsweise Messwert) in unverfälschter Weise zurückgegriffen werden, wobei zu jedem Wert auch stets die ursprüngliche Einheit (Quelleinheit) und der Ursprung (Herkunft, Referenz) des Wertes für einen Parameter zugänglich ist.

Die Lösung der Aufgabe sieht außerdem ein Diagnosesystem für ein Kraftfahrzeug und ein Computerprogramm für ein Datenverarbeitungsgerät vor, welches zur Ausführung des vorstehend beschriebenen Verfahrens ausgebildet ist. Ein solches Diagnosesystem bietet die hinsichtlich des Verfahrens gegebenen Vorteile.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für das erfindungsgemäße Diagnosesystem.

Vorteilhaft sind die Rechenvorschriften - und auch die Beschreibungen zum jeweiligen Parameter in der jeweiligen Nationalsprache - in einer XML-Datei verzeichnet, so dass beispielsweise die Umrechnungs-Rechenvorschriften nur einmal "zentral" programmiert und getestet werden müssen.

Als Verwendungsstellen für die Werte können vorteilhaft Anzeigevorrichtungen zur Anzeige der Parameter und/oder Protokollierungseinrichtungen zur Protokollierung der Parameter verwendet werden. Eine weitere vorteilhafte Verwendung besteht in der Übertragung zu einem (beispielsweise herstellerseitigen) externen Service-Zentrum, wo die Werte ebenfalls weiterverarbeitet oder protokolliert werden können.

Durch eine Konfiguration des Diagnosesystems mittels eines Autorensystems können vorteilhaft an weiteren Stellen des "Workflow" dem jeweiligen Textcontainer zusätzliche oder geänderte Zieleinheiten zugefügt werden, d.h. somit können Einheiten definiert werden, die in einem weiteren Verarbeitungsschritt des Textcontainers alternativ zur Quelleinheit bzw. alternativ zur bisher definierten "Zieleinheit" verwendet werden können. Auch weitere Angaben des Textcontainers, beispielsweise die zu verwendende Nationalsprache, können mittels des Autorensystems im weiteren Workflow für einen jeweiligen Verarbeitungsschritt definiert werden. Dasselbe gilt für eine mögliche Formatierung des Wertes bei seiner Verwendung, beispielsweise im Bezug auf eine Rundung, Fließkommadarstellung etc..

In der XML-Datei, welche die Rechenvorschriften für die Umrechung eines Wertes von einer Quelleinheit in eine Zieleinheit definiert ist, können auch die Texte definiert werden, die im Rahmen einer Klartext-Ausgabe einer Benutzeroberfläche verwendet werden sollen.

Ausführungsbeispiele des erfindungsgemäßen Verfahrens werden nachfolgend anhand der Zeichnungen erläutert. Sie dienen gleichzeitig der Erläuterung eines erfindungsgemäßen Diagnosesystems.

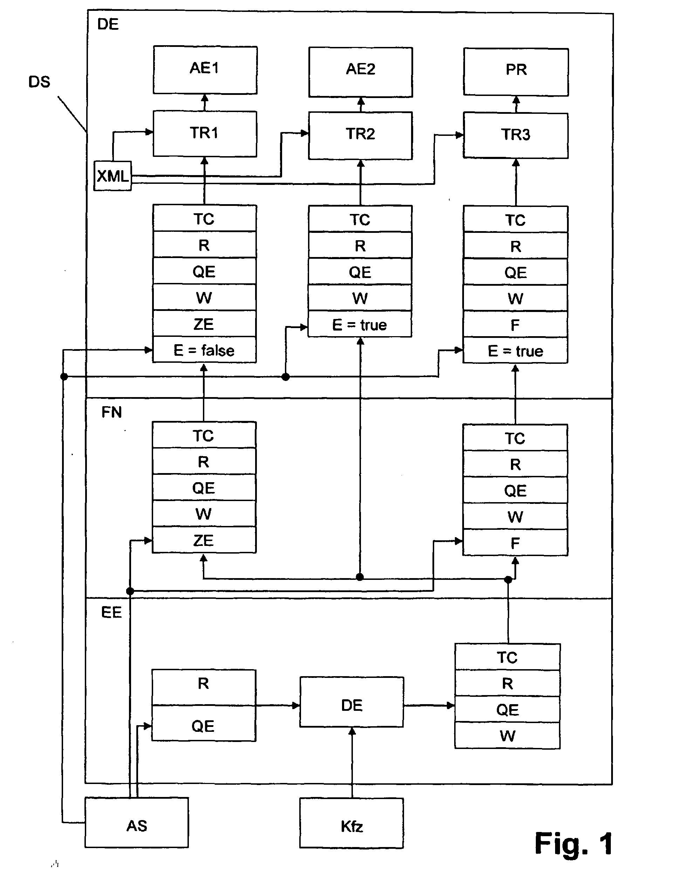

Dabei zeigt die einzige Figur in schematischer Darstellung, das Auslesen von Werten aus einem Kraftfahrzeug und die Umsetzung in einen erfindungsgemäßen Textcontainer.

In der Figur ist schematisch eine Verarbeitungskette ("Workflow") eines Diagnosesystems DS dargestellt, welches durch ein Autorensystem AS konfigurierbar ist und welches über eine (hier nicht dargestellte) Schnittstelle mit einem Kraftfahrzeug KFZ verbunden ist. Funktional ist das Diagnosesystem DS in eine Ermittlungs-Ebene EE zur Erfassung von Daten aus dem Kraftfahrzeug KFZ, in eine Ebene zur fachlichen Nutzung FN und in eine Darstellungs-Ebene DE gegliedert.

Die Datenhaltung für die aus dem Kraftfahrzeug KFZ ausgelesenenen Werte W, z.B. Messdaten, Zustandsinformationen etc., erfolgt in einem sog. Textcontainer TC, wobei für jeden Messwert oder für jeden logisch zusammenhängenden Datensatz ein separater Textcontainer TC erstellt wird. Dabei sind die Werte W jeweils numerische Größen für Parameter des Kraftfahrzeuges KFZ. Im Rahmen des vorliegenden Ausführungsbeispiels wird ein einziger Textcontainer TC betrachtet, der jedoch in den unterschiedlichen Verarbeitungsebenen des Diagnosesystems DS mehrfach verwendet wird und daher mehrfach dargestellt ist. Dabei kann, definiert durch das Autorensystem AS, der Textcontainer TC an seinen unterschiedlichen Verwendungsstellen auch mit unterschiedlichen Attributen, beispielsweise hinsichtlich einer darzustellenden Einheit oder hinsichtlich eines darzustellenden Formats, ausgestattet sein. Es sei darauf hingewiesen, dass die hier dargestellte Verwendung des Textcontainers TC in den einzelnen Verarbeitungs-Ebenen EE, FN, DE rein willkürlich ist und in der Realität auch ein anderer "Workflow" bezüglich des Textcontainers TC durchgeführt werden kann.

Im Folgenden wird exemplarisch erläutert, wie ein Wert W eines Parameters, in diesem Fall betrifft der Parameter eine Motor-Temperatur, aus dem Kraftfahrzeug KFZ ausgelesen und durch das Diagnosesystem DS weiterverarbeitet wird. Dazu wird der Wert W für die Motor-Temperatur aus dem Kraftfahrzeug KFZ durch eine Komponente DE ("Daten-Ermittlung") ausgelesen. Mittels des Autorensystems AS ist konfiguriert worden, dass diesem auszulesenden Wert jeweils eine Referenz (hier beispielsweise "MT" für "Motor-Temperatur"), und eine Quelleinheit QE (hier: °C) zugeordnet wird; aus diesen Angaben und dem Wert W als solchem wird nun in der Ermittlungs-Ebene EE der Textcontainer TC gebildet. Der Textcontainer TC wird nun gespeichert (in der Figur nicht dargestellt) und somit u.a. der Ebene zur fachlichen Nutzung FN zur Verfügung gestellt, wobei dort jeweils eine Kopie des gespeicherten Textcontainers TC verwendet wird. In der Ebene der fachlichen Nutzung FE, FN wird nun der Textcontainer TC und der darin gespeicherte Wert W verwendet und weiterverarbeitet; dies entspricht im Wesentlichen dem Stand der Technik und wird an dieser Stelle nicht weiter ausgeführt. In dieser Ebene FN werden den verschiedenen Kopien des Textcontainers TC weitere Attribute hinzugefügt; in der Figur ist beispielsweise auf der linken Seite dargestellt, dass dem Textcontainer TC eine Zieleinheit ZE hinzugefügt wird; dies ist also eine Einheit, mit der der Wert W des Textcontainers TC im weiteren Verarbeitungs-Zyklus dieser Kopie des Textcontainers TC vorzugsweise verwendet werden soll. Im Rahmen des vorliegenden Ausführungsbeispiels bedeutet dies, dass als Zieleinheit die Einheit "°F" zugeordnet werden soll, weil das Diagnosesystem zur Verwendung in einem angelsächsischen Land vorgesehen ist, wo das Bedienpersonal daran gewöhnt ist, Temperaturen in der Einheit Fahrenheit zu lesen. Diejenige Kopie des Textcontainers TC, die auf der rechten Seite der Ebene zur fachlichen Nutzung FN dargestellt ist, bekommt, festgelegt durch das Autorensystem AS, ein anderes Attribut hinzugefügt, nämlich eine Formatierung F, die hierbei besagt, dass der Wert auf vollständige °C (diese Kopie des Textcontainers TC ist keine neue Zieleinheit zugeordnet) gerundet dargestellt werden soll, also ohne Nachkommastellen. Die beiden mit Attributen versehenen Textcontainer TC der Ebene zur fachlichen Nutzung FN werden nun in der Darstellungs-Ebene DE weiterverarbeitet; außerdem wird in der Darstellungs-Ebene DE auch eine Kopie des ursprünglichen Textcontainers TC (in der Darstellungs-Ebene DE mittig dargestellt) verarbeitet.

In der Darstellungs-Ebene DE wird, ebenfalls definiert durch das Autorensystem AS, dem hier verwendeten Textcontainer TC bzw. den Kopien davon jeweils ein weiteres Attribut hinzugefügt, welches ein sog. "Flag" ist und welches besagt, ob die jeweilige Weiterverarbeitung in Form einer Anzeige oder Protokollierung des Wertes W zusammen mit einer Einheiten-Bezeichnung (hier: °C oder °F), oder ohne Ausgabe/Speicherung einer Einheiten-Bezeichnung erfolgen soll.

Zur ggf. notwendigen Umrechnung des Wertes W in eine etwaige Zieleinheit ZE und für die Darstellung/Protokollierung des Wertes W in einer zu verwendenden Nationalsprache werden Umrechnungs-Anweisungen und Textbausteine benötigt, die in einer Datei XML festgelegt sind; diese Datei ist vorzugsweise im Format "extensible mark-up language" ("XML-Datei") gespeichert. Vorzugsweise ist diese Datei XML derart ausgestaltet, dass sie länder- und märkteübergreifend für alle Diagnosesysteme DS diesen Typs identisch verwendet werden kann. Im Übrigen ist die Verwendung dieser Datei XML nicht auf die Darstellungs-Ebene beschränkt; vielmehr kann sie beispielsweise auch für eine notwendige Umrechnung von Werten W in der Ebene zur fachlichen Nutzung FN verwendet werden. Im vorliegenden Ausführungsbeispiel werden die drei in der Darstellungs-Ebene verwendeten Textcontainer TC mittels der Verarbeitungseinheiten TR1, TR2, TR3 (TA = "Text Resolver") verarbeitet; das Ergebnis sind Textausgaben, die durch die Anzeigeeinrichtungen AE1, AE2 dargestellt bzw. durch die Protokollierungseinheit PR gespeichert werden können.

Im Folgenden ist ein Auszug aus der Datei XML dargestellt, in dem die Darstellung eines Parameters für eine Geschwindigkeit und die Umrechnung eines Geschwindigkeits-Messwertes von "km/h" in "m/s" (Meter pro Sekunde) definiert ist:

```
 - <HashElement Key="9"
 Type="Siemens.SidisEnterprise.BaseSystem.LanguageManagement.TextObjectResolver.SystemUnitCa
 tegory">
 <BaseValue Name="Name" Type="System.Striag" Value="Velocity" />
 - <1-- Reference unit for Velocity: km/h -->
 - <HashValue Name="SystemUnitValues" Count="3">
 - <HashElement Key="1"
 Type="Siemens.SidisEnterprise.BaseSystem.LanguageManagement.TextObjectResolver.SystemUnitVa
 lue">
 <BaseValue Name="Name" Type="System.String" Value="km/h" />
 <BaseValue Name="Key" Type="System.String" Value="Velocity_km_h" />
 - <1-- The default format string will be used when no format string is set in the culture
 unit and is not given by program -->
 <BaseValue Name="Format" Type="System.String" Value="F2" />
 <BaseValue Name="ConvertToReference" Type="System.String" Value="X" />
 <BaseValue Name="ConvertFromReference" Type="System.String" Value="X" />
 </HashElement>
 - <HashElement Key="2"
 Type="Siemens.SidisEnterprise.BaseSystem.LanguageManagement.TextObjectResolver.SystemUnitVa
 lue">
 <BaseValue Name="Name" Type="System.String" Value="km/s" />
 <BaseValue Name="Key" Type="System.String" Value="Velocity_km_s" />
 - <1-- The default format string will be used when no format string is set in the culture
 unit and is not given by program -->
 <BaseValue Name="Format" Type="System.String" Value="F2" />
 <BaseValue Name="ConvertToReference" Type="System.String" Value="X*3600" />
 <BaseValue Name="ConvertFromReference" Type="System.String" Value="X/3600" />
 </HashElement>
 - <HashElement Key="3"
 Type="Siemens.SidisEnterprise.BaseSystem.LanguageManagement.TextObjectResolver.SystemUnitVa
 lue">
 <BaseValue Name="Name" Type="System.String" value="m/s" />
 <BaseValue Name="Key" Type="System.String" Value="Velocity_m_s" />
 - <1-- The default format string will be used when no format string is set in the culture
 unit and is not given by program -->
 <BaseValue Name="Format" Type="System.String" Value="F2" />
 <BaseValue Name="ConvertToReference" Type="System.String" Value="X*3.6" />
 <BaseValue Name="ConvertFromReference" Type="System.String" Value="X/3.6" />
 </HashElement>
 c/HashValue>
 </HashElement>
```

In analoger Weise enthält die Datei XML auch Darstellungs- und Umrechungsanweisungen für den Wert W, der wahlweise in °C oder °F darstellbar ist.

Die Verwendung der Datei XML bietet den Vorteil, dass in einer zentralen Konfiguration alle dem Diagnosesystem DS zur Verfügung stehenden Einheiten E, ZE und ihre ländersprachlichen Abbildungen verwaltet werden. Diese Konfiguration wird über die Text-Resolver TR1, TR2, TR3 einheitlich eingesetzt und brauchen deswegen einmalig getestet zu werden. Die Pflege dieser Konfiguration und damit der Datei XML findet an einer zentralen Stelle statt und benötigt keine Änderung am Diagnosesystem DS selbst, beispielsweise mittels des Autorensystems AS. Über das Autorensystem AS kann die Einheiten-Konfiguration ergänzt und damit direkt benutzt werden. Die Einheiten E, ZE können den Werten W und damit den Parametern, mit denen die Werte W verknüpft sind, direkt zugewiesen werden. Die ländersprachliche Abbildung und Umrechnung findet automatisch im Diagnosesystem DS statt. Darüber hinaus können die Informationen des Textcontainers TC als Protokolldaten abgespeichert werden. Zur Erstellung und/oder zum Anzeigen eines derart erzeugten Protokolls können durch einen Text-Resolver TR3 wiederum die Vorschriften und Informationen der Datei XML verwendet werden.

## Patentansprüche

1. Verfahren zum Betrieb eines durch ein Autorensystem konfigurierbaren Diagnosesystems (DS) für ein Kraftfahrzeug (KFZ),
wobei diagnoserelevante Daten aus einem fahrzeugseitigen Informationssystem in das Diagnosesystem (DS) übertragen werden, und
wobei das Diagnosesystem (DS) durch ein Autorensystem (AS) konfiguriert wird,
**dadurch gekennzeichnet,**
- **dass** ein Wert (W) eines Parameters der diagnoserelevanten Daten des Kraftfahrzeugs (KFZ) nach der Übertragung in das Diagnosesystem (DS) zusammen mit einer zugehörigen Quelleinheit (QE) und einer den Parameter bezeichnenden Referenz in einem Textcontainer (TC) gespeichert wird,
- **dass** dem Textcontainer (TC) mittels des Autorensystems (AS) eine definierte Zieleinheit zugefügt wird, wobei der ursprüngliche Wert (W) und die Quelleinheit (QE) im Textcontainer (TC) verbleiben, und
- **dass** an einer oder an mehreren Verwendungsstellen des Wertes (W) des Parameters jeweils eine Umsetzung des Wertes (W) von der Quelleinheit (QE) in die Zieleinheit (ZE) vorgenommen wird.

2. Verfahren nach Patentanspruch 1,
**dadurch gekennzeichnet, dass**
die Umsetzung anhand einer Rechenvorschrift erfolgt, die mittels einer XML-Datei (XML) in dem Diagnosesystem (DS) hinterlegt ist.

3. Verfahren nach einem der vorhergehenden Patentansprüche,
**dadurch gekennzeichnet, dass**
als die Verwendungsstellen eine Anzeigevorrichtung (AE1, AE2) zur Anzeige und/oder eine Protokollierungseinrichtung (PR) zur Protokollierung des Wertes (W) verwendet werden.

4. Verfahren nach Patentanspruch 3,
**dadurch gekennzeichnet, dass**
für die Anzeige des Wertes (W) mittels der Anzeigevorrichtung (AE1, AE2) und/oder für die Protokollierung des Wertes (W) mittels der Protokollierungseinrichtung (PR) das Hinzufügen einer weiteren Zieleinheit (ZE) zu dem Textcontainer (TC) vorgesehen ist, wobei jeweils eine Umsetzung des Wertes (W) des Parameters in die weitere Zieleinheit (ZE) erfolgt.

5. Verfahren nach einem der vorhergehenden Patentansprüche,
**dadurch gekennzeichnet, dass**
mittels des Autorensystems (AS) dem Textcontainer (TC) eine Anweisung für eine Formatierung für die Darstellung oder Protokollierung des Wertes (W) des Parameters hinzugefügt wird.

6. Verfahren nach einem der vorhergehenden Patentansprüche,
**dadurch gekennzeichnet, dass**
dem Textcontainer (TC) mittels des Autorensystems (AS) zumindest eine Angabe für eine bei der Ausgabe oder bei der Protokollierung des Wertes (W) zu verwendenden Sprache hinzugefügt wird.

7. Verfahren nach einem der Patentansprüche 2 bis 6,
**dadurch gekennzeichnet, dass**
die XML-Datei (XML) mit zumindest einem Anzeigetext in zumindest einer Sprache ausgestattet wird, wobei der Anzeigetext zur Ausgabe mit dem Wert (W) des Parameters vorgesehen ist.

8. Diagnosesystem (DS) für ein Kraftfahrzeug (KFZ),
**dadurch gekennzeichnet, dass**
das Diagnosesystem (DS) zur Ausführung eines Verfahrens gemäß einem der Ansprüche 1 bis 7 ausgebildet ist.

## Claims

1. Method for the operation of a diagnosis system (DS), which can be configured by an author system, for a motor vehicle (KFZ),
wherein diagnosis-relevant data from a vehicle-end information system are transmitted to the diagnosis system (DS), and wherein the diagnosis system (DS) is configured by an author system (AS),
**characterized**
- **in that** a value (W) for a parameter of the diagnosis-relevant data from the motor vehicle (KFZ) following transmission to the diagnosis system (DS) is stored together with an associated source unit (QE) and a reference denoting the parameter in a text container (TC),
- **in that** the text container (TC) has a defined destination unit added to it by means of the author system (AS), wherein the original value (W) and the source unit (QE) remain in the text container (TC), and
- **in that** one or more points of use for the value (W) of the parameter respectively convert(s) the value (W) from the source unit (QE) to the destination unit (ZE).

2. Method according to Patent Claim 1,
**characterized in that**
the conversion is effected using a computation code which is stored in the diagnosis system (DS) using an XML file (XML).

3. Method according to one of the preceding patent claims,
**characterized in that**
the points of use used are a display apparatus (AE1, AE2) for display and/or a logging device (PR) for logging the value (W).

4. Method according to Patent Claim 3,
**characterized in that**
provision is made for a further destination unit (ZE) to be added to the text container (TC) for the display of the value (W) by means of the display apparatus (AE1, AE2) and/or for the logging of the value (W) by means of the logging device (PR), wherein the value (W) of the parameter is respectively converted to the further destination unit (2E).

5. Method according to one of the preceding patent claims,
**characterized in that**
the author system (AS) is used to add to the text container (TC) an instruction for formatting for the presentation or logging of the value (W) of the parameter.

6. Method according to one of the preceding patent claims,
**characterized in that**
the author system (AS) is used to add to the text container (TC) at least one statement for a language that is to be used for the output or for the logging of the value (W).

7. Method according to one of Patent Claims 2 to 6,
**characterized in that**
the XML file (XML) is equipped with at least one display text in at least one language, wherein the display text is provided for the purpose of output with the value (W) of the parameter.

8. Diagnosis system (DS) for a motor vehicle (KFZ),
**characterized in that**
the diagnosis system (DS) is designed to carry out a method according to one of Claims 1 to 7.

## Revendications

1. Procédé pour faire fonctionner un système (DS) de diagnostic configurable par un système expert pour un véhicule ( KFZ ) automobile,
dans lequel on transmet des données pertinentes pour le diagnostic d'un système d'information du côté du véhicule au système ( DS ) de diagnostic, et
dans lequel on configure le système ( DS ) de diagnostic par un système ( AS ) expert,
**caractérisé**
- **en ce qu'**on mémorise dans un conteneur ( TC ) de texte une valeur ( W ) d'un paramètre des données pertinentes pour le diagnostic du véhicule ( KFZ ) automobile après la transmission dans le système ( DS ) de diagnostic ensemble avec une unité source ( QE ) en faisant partie et une référence désignant le paramètre,
- **en ce qu'**on envoie au conteneur ( TC ) de texte une unité cible définie au moyen du système ( AS ) expert, la valeur ( W ) initiale et l'unité source ( QE ) restant dans le conteneur ( TC ) de texte, et
- **en ce qu'**on effectue en un ou en plusieurs points d'utilisation de la valeur ( W ) du paramètre, respectivement, une conversion de la valeur ( W ) de l'unité source ( QE ) en l'unité cible ( ZE )

2. Procédé suivant la revendication 1,
**caractérisé en ce que**
on effectue la conversion au moyen d'une prescription informatique, qui est mémorisée dans le système ( DS ) de diagnostic au moyen d'un fichier XML ( XML ).

3. Procédé suivant l'une des revendications précédentes,
**caractérisé en ce que**
on utilise les points d'utilisation d'un dispositif ( AE1, AE2 ) d'affichage pour l'affichage et/ou un dispositif ( PR ) de consignation pour consigner la valeur ( W ).

4. Procédé suivant la revendication 3,
**caractérisé en ce que**
pour l'affichage de la valeur ( W ) au moyen du dispositif ( AE1, AE2 ) d'affichage et/ou pour la consignation de la valeur ( W ) au moyen du dispositif ( PR ) de consignation, il est prévu l'addition d'une autre unité cible ( ZE ) au conteneur ( TC ) de texte, respectivement, une conversion de la valeur ( W ) du paramètre s'effectuant dans l'autre unité cible ( ZE ).

5. Procédé suivant l'une des revendications précédentes,
**caractérisé en ce que**
au moyen du système ( AS ) expert, on ajoute au conteneur ( TC ) de texte une instruction pour une formatation en vue de la représentation ou de la consignation de la valeur ( W ) du paramètre.

6. Procédé suivant l'une des revendications précédentes,
**caractérisé en ce que**
au conteneur ( TC ) de texte, on ajoute au moyen du système ( AS ) expert au moins une indication pour une langue à utiliser lors de l'émission ou de la consignation de la valeur ( W ).

7. Procédé suivant l'une des revendications 2 à 6,
**caractérisé en ce que**
on munit le fichier XML (XML) d'au moins un texte d'affichage en au moins une langue, le texte d'affichage étant prévu pour l'émission avec la valeur ( W ) du paramètre.

8. Système ( DS ) de diagnostic pour un véhicule (KFZ) automobile,
**caractérisé en ce que**
le système ( DS ) de diagnostic est constitué pour l'exécution d'un procédé suivant l'une des revendications 1 à 7.
